(19) Europäisches Patentamt

European Patent Office

Office européen des brevets

(11) EP 1 587 000 A1

(12) **EUROPEAN PATENT APPLICATION**
published in accordance with Art. 158(3) EPC

(43) Date of publication:
**19.10.2005 Bulletin 2005/42**

(51) Int Cl.⁷: **G06F 12/14**, G06F 15/00, G06F 17/60

(21) Application number: **03786282.8**

(22) Date of filing: **24.12.2003**

(86) International application number:
**PCT/JP2003/016624**

(87) International publication number:
**WO 2004/066155 (05.08.2004 Gazette 2004/32)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **23.01.2003 JP 2003014244**

(71) Applicants:
• **SONY CORPORATION**
**Tokyo 141-0001 (JP)**
• **Murakami, Miki**
**Tokyo 141-0001 (JP)**
• **Hisamatsu, Fumuaki**
**Tokyo 141-0001 (JP)**

(72) Inventors:
• **MURAKAMI, Miki, c/o SONY CORPORATION**
**Tokyo 141-0001 (JP)**
• **HISAMATSU, Fumiaki,**
**c/o SONY CORPORATION**
**Tokyo 141-0001 (JP)**

(74) Representative: **Melzer, Wolfgang**
**Patentanwälte**
**Mitscherlich & Partner,**
**Sonnenstrasse 33**
**80331 München (DE)**

(54) **CONTENT DELIVERY SYSTEM, INFORMATION PROCESSING APPARATUS OR INFORMATION PROCESSING METHOD, AND COMPUTER PROGRAM**

(57)    A copyright-managed environment is provided in which encrypted content and a license for decrypting the content are handled separately. Each client registered in the environment uses content legitimately. After the content acquired by a client A of a user is stored into a client B of the same user, the client B may receive a new license for the same content from a license server. This allows the content to be shared between the clients A and B while the copyright of the content is protected. The inventive environment allows the user having acquired a license to use the corresponding content on a plurality of apparatuses in his or her possession while illegal content uses are forestalled.

F I G. 1

## Description

Technical Field

The present invention relates to a content delivery system, an information processing apparatus or method, and a computer program for managing the uses of contents such as moving images and digital data including music data, image data and electronic publications, all delivered to their destinations over networks. More particularly, the invention relates to a content delivery system, an information processing apparatus or method, and a computer program for managing the uses of content based on contracts such as licenses as well as on specific use conditions.

Furthermore, the present invention relates to a content delivery system, an information processing apparatus or method, and a computer program for controlling the uses of contents by granting licenses to content users for copyright protection. More specifically, the invention relates to a content delivery system, an information processing apparatus or method, and a computer program for enabling a licensed user to use contents on a plurality of apparatuses while preventing illegal content uses.

Background Art

With the widespread acceptance of the Internet in recent years, the delivery over the network of diverse kinds of digital contents such as computer files is thriving. As broadband communication networks (xDigital Subscriber Line (xDSL), CATV (cable TV), wireless networks, etc.) are coming into general use today, a viable framework is being set up to allow digital data including music data, image data and electronic publications, as well as so-called rich contents like moving images, to be transmitted to users with no stress.

Because the contents to be delivered over the network is in digital form, it can be copied, falsified or otherwise manipulated in a fairly easy manner. Indeed, content is copied, falsified or otherwise manipulated all the time today. This has been a major impediment to letting content venders enjoy just benefits from marketing their digital products. As a result, the venders have been forced to raise the prices of their contents to compensate their losses. The high prices in turn constitute another impediment to the smooth distribution of digital content.

Utilization of encryption technology makes it possible to protect contents delivered over communication channels from getting tapped by unscrupulous third parties. However, protecting the delivered contents solely during transmission is not enough. Unlawful copies of contents delivered to legitimate users have also become a major issue.

One way of dealing with the problems concerning digital content is by resorting to the scheme called Digital Rights Management (DRM) that has been adopted recently. What follows is an overview of DRM together with a description of some problems it has raised.

Digital Rights Management (DRM) provides a framework allowing users to use content only after getting licenses to use it. Variations of this scheme include "Windows Media Right Manager" offered by Microsoft Corporation and "Electronic Media Management System (EMMS)" provided by IBM Corporation, both firms based in the United States.

A typical DRM system is constituted by a content provider, a license administrator, and users. The users each own a content reproduction apparatus that is employed to make use of contents. The license administrator issues licenses to the users while the content provider offers content to them.

Content (Cont) is distributed in a format $E(K_c, Cont)$ encrypted by use of a key (content key $K_c$) that differs from content to content. This type of content will be referred to as encrypted contents in the description that follows.

When a user wants to use a content Cont, he or she requests the license administrator to issue a relevant license for the desired content. On receiving the request, the license administrator performs an appropriate fee-charging process regarding the user in question before issuing the license.

Specifically, issuing the license means furnishing a content key $K_c$ to the user's content reproduction apparatus. The license administrator shares a different encryption key $K_u$ with each of the reproduction apparatuses registered. (The sharing of an encryption key $K_u$ occurs upon issuance of each license, or previously shared keys are installed in the reproduction apparatuses.) The content key $K_c$ is encrypted into data $E(K_u, K_c)$ by use of the encryption key $K_u$ before the data is transferred to the reproduction apparatus. The data will be called the "license token" hereunder.

The user's reproduction apparatus that received the license can proceed with content reproduction using the encryption key $K_u$, received license token $E(K_u, K_c)$, and encrypted content $E(K_c, Cont)$. Initially, the content key $K_c$ is decrypted from the license token $E(K_u, K_c)$. The content (Cont) is then decrypted for reproduction from the encrypted content $E(K_c, Cont)$ using the content key $K_c$. The content can be used only if the combination of the reproduction apparatus, license token, and encrypted content is valid, i.e., only if the user has duly acquired the license.

In order to ensure that the copyright of content is protected, the reproduction apparatus must prevent decrypted content from leaking out. This requires the reproduction apparatus to operate in such a manner that the encryption key $K_u$, content key $K_c$, and decrypted content Cont will not get out. Once the decrypted content leaks out, it can be copied and abused unlimitedly. In other words, the reproduction apparatus must be capable of preventing the encryption key $K_u$, content key

$K_c$, and encrypted content Cont from coming out of the apparatus. This type of apparatus will be called a "legitimate" reproduction apparatus hereunder.

Under the DRM scheme, the issuance of a content license (i.e., permission to use) to a user is realized when the content key $K_c$ is granted to the user's (specific) reproduction apparatus. The granting of the license is predicated on the condition that the reproduction apparatus receiving the content key $K_c$ be legitimate. It follows that the license administrator, whenever issuing a license, must identify a legitimate apparatus for which the license (i.e., content key) is destined. The license administrator is thus required to possess a database of legitimate reproduction apparatuses and a database serves as the basis for issuing licenses.

However, given the fact that there are so many reproduction apparatuses in use, it is too costly and/or time-consuming to search the database for every destination apparatus requesting a license. Furthermore, where licenses need to be issued frequently because of a particular content download scheme, the server accommodating the database will likely be overloaded.

Suppose that certain content is to be offered to a specific user. This involves advance authentication of the user. In the DRM setup, the authentication of the user must be supplemented with identification of the content reproduction apparatus owned by the user in question. A license then needs to be generated for the identified apparatus. These steps take time and often lower the speed at which the content is provided.

The average user owns and utilizes a plurality of content reproduction apparatuses, whereas each content license is issued only to a specific apparatus. Even if the user's reproduction apparatuses are "legitimate," the user must obtain a license for each of the apparatuses in his or her possession if the same content is desired to be reproduced on the multiple apparatuses. This can be a tedious chore. In paying for each additional license, the user may feel overcharged for using the same content.

As part of today's growing businesses dealing in payable online content distribution and delivery, a plurality of content providers are offering diverse kinds of content. It may happen that the same user possessing a plurality of "legitimate" reproduction apparatuses has each of his or her apparatuses registered with a different content provider. In such a case, the user is allowed to reproduce the content from one provider only on a single relevant apparatus and not any other one. The lack of flexibility to share content between the multiple apparatuses belonging to the same user deprives him or her of the full benefit of having registered with (or acquired accounts from) a plurality of content providers. The content providers, for their part, can be perceived as unduly unenthusiastic about letting users enjoy a little more convenience of the shared content.

Disclosure of Invention

It is therefore an object of the present invention to provide a content delivery system, an information processing apparatus or method, and a computer program for suitably managing the uses of content based on contracts such as licenses as well as on specific use conditions.

It is another object of the invention to provide a content delivery system, an information processing apparatus or method, and a computer program for appropriately controlling the uses of content by granting licenses to content users for copyright protection.

It is a further object of the invention to provide a content delivery system, an information processing apparatus or method, and a computer program for enabling a licensed user to use content on a plurality of apparatuses while preventing illegal content uses.

In achieving the foregoing and other objects of the present invention and according to a first aspect thereof, there is provided a content delivery system for delivering content to a client of a user who possesses at least two clients, each of the clients using content legitimately based on an acquired license, the content delivery system including: registering means for registering each of the clients of the user in order to acquire customer-related information; customer-related information managing means for managing the customer-related information; content providing means which, in response to a request from any one of the clients, provides content to the requesting client; first license granting means which, in response to a request from the client having acquired the content from the content providing means, grants the requesting client a license for the acquired content; and second license granting means which, after the user has moved the content from one client to another in the possession of the same user, grants the user a license for the moved content.

The "system" in this context refers to a logical configuration of a plurality of apparatuses (or function modules representative of specific functions). It does not matter whether the apparatuses or function modules are housed in a single enclosure.

When the content delivery system according to the first aspect of the invention is in use, the user is supposed to have a plurality of clients. Where each of the clients is registered with a different license server, any one of the clients having downloaded content may move the downloaded content to another client to which a new license is smoothly acquired for content reproduction.

That is, the inventive system above allows the licensed user to use the same content on a plurality of apparatuses in his or her possession while illegal content uses are prevented. The burden on the user having to work out the sharing of content between multiple clients is alleviated, and the utilization of content delivery services by the general public is promoted.

The sharing of content between a plurality of clients is typically implemented through collaboration between content providers. Illustratively, the first and the second license granting means may be run by different content providers. In such cases, the customer-related information providing means is queried by the content providers involved for information about their mutual customers. This makes it a legitimate practice to grant a license for content to a client that differs from the destination having downloaded the same content.

Preferably, the customer-related information providing means may manage a table of correspondences between leaf ID's and client ID's, a table of correspondences between client ID's and user ID's, a table of correspondences between content ID's and license ID's, a table of correspondences between user ID's and the content ID's of downloaded content, and a table of correspondences between user ID's and the license ID's of downloaded licenses.

The customer-related information managing means may preferably update the customer-related information every time the content providing means provides content to a client and/or any one of the first and the second license granting means grants a license to a client.

In response to a request from a client for a license, the second license granting means may preferably acquire the requested license from the first license granting means and return the acquired license to the requesting client. When granting the license, the second license granting means, by querying the customer-related information managing means, may preferably verify that the requesting client is legitimate, that the same user possessing the requesting client is in possession of another client registered with the first license granting means, and that the requested license has already been granted to the other client by the first license granting means.

Preferably, the content delivery system according to the first aspect of this invention may further include fee-charging means for performing a fee-charging process regarding the client to which a license has been granted.

The fee-charging means may preferably make a difference in charges between a case in which the first license granting means grants a license to a client downloading content, and a case in which the second license granting means grants a license to another client of the same user in possession of the downloading client. Illustratively, the same license requested for a second time may be granted at a discount or offered free of charge. This alleviates the cost burden on the user wishing to use the same content on a plurality of clients. The scheme in turn promotes the utilization of content delivery services by the general public.

According to a second aspect of this invention, there is provided a computer program which is described in a computer-readable format and which allows a computer system to grant a user a license for using content, the user possessing at least two clients which use content legitimately based on acquired licenses, the computer program including: a first steps of determining whether or not a client of the user requesting a license is legitimate; a second step of determining whether or not the user possessing the requesting client is also in possession of another client to which the license has already been granted; and a third step of granting the same license to the requesting client if the determination in the second step provides an affirmative result.

The second aspect of this invention defines a computer program described in a computer-readable format and designed to let the computer system grant the user a license for using content. When installed in the computer system, the inventive computer program works in collaboration with the system allowing the user to share the same content between a plurality of clients while protecting the copyright of the content. The benefits are the same as those obtained with the content delivery system according to the first aspect of the invention.

Other objects, features and advantages of the present invention will become apparent from the following detailed description when read in conjunction with the accompanying drawings.

Brief Description of Drawings

Fig. 1 is a schematic view outlining a typical configuration of a content delivery system embodying this invention;

Fig. 2 is a schematic view showing a hardware structure of a host device acting as a server or as a client;

Fig. 3 is a schematic view depicting a functional structure of the host device acting as a client;

Fig. 4 is a schematic view indicating a functional structure of the host device acting as a license server;

Fig. 5 is a schematic view illustrating a functional structure of the host device acting as a content server;

Fig. 6 is a flowchart of steps in which a client makes advance registration with the license server;

Fig. 7 is a flowchart of steps in which a client downloads content;

Fig. 8 is a flowchart of steps performed by the content server allowing content to be downloaded;

Fig. 9 is a schematic view of a data format in which a content server A delivers content to a client A;

Fig. 10 is a flowchart of steps in which the client A reproduces downloaded content;

Fig. 11 is a flowchart of steps in which the client A acquires a license necessary for reproducing downloaded content;

Fig. 12 is a schematic view showing a data structure of a license granted by the license server to a client;

Fig. 13 is a flowchart of steps in which the license server A grants a license to the client A;

Fig. 14 is a flowchart of detailed steps in which the client A renews a license with the license server;

Fig. 15 is a flowchart of detailed steps performed by the license server allowing a license to be renewed;

Fig. 16 is a flowchart of steps in which a license server B grants a license in response to a license request from a client B in collaboration with another content provider;

Fig. 17 is an explanatory view showing how a client uses content supplied by the content server on the basis of a license granted by the license server; and

Fig. 18 is a schematic view showing an EKB structure.

Best Mode for Carrying Out the Invention

Preferred embodiments of this invention will now be described in detail with reference to the accompanying drawings.

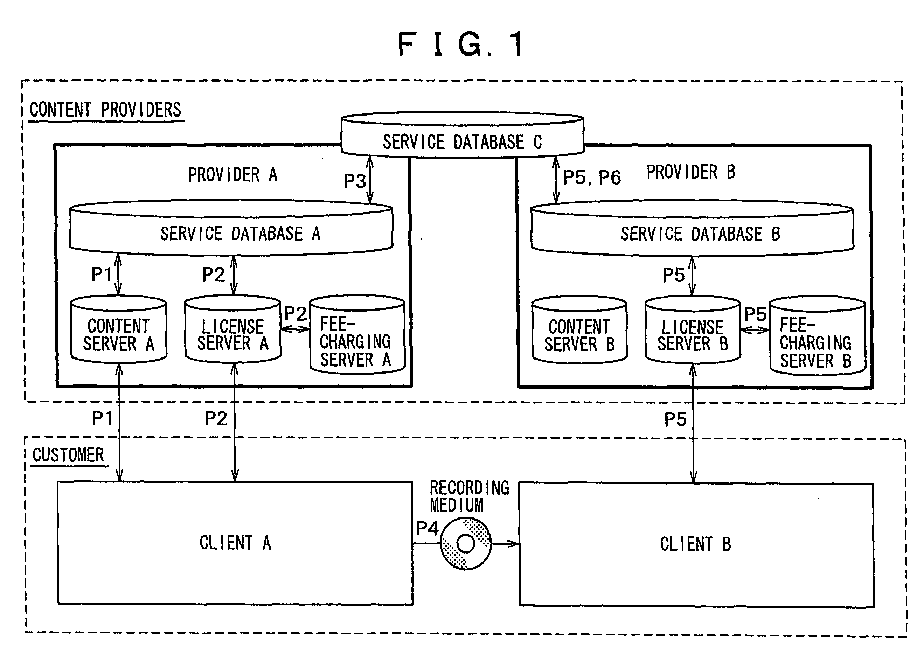

Fig. 1 schematically shows a typical configuration of a content delivery system embodying this invention. In the setup of Fig. 1, the content delivery system is divided into two sides: content providers on one side, and customers on the other side. The content providers and their customers are interconnected by the Internet or by other broadband communication networks (e.g., xDigital Subscriber Line (xDSL), cable TV (CATV), or wireless networks).

There typically exist a plurality of content providers, such as providers A and B as illustrated. Each content provider has a license server, a content server, a fee-charging server, and a service database server. The license server accepts user (client) registration from each customer's content reproduction apparatus (called the client hereunder) and grants content licenses to clients. The content server stores content to be provided to clients and delivers content as requested. The fee-charging server performs a fee-charging process whenever a user registers with the provider and/or a license is granted. The service database server holds diverse items of data necessary for granting content licenses to customers or to clients.

With this embodiment, the content providers are interconnected by the Internet or by other backbone communication networks. In order to facilitate collaboration in business between the content providers, there exists a service database server C (DB C) that supervises the service databases of the providers involved.

A service database server A (DB A) and a service database server (DB B) owned by each content provider may query the service database server (DB C) about the user information not in their possession. The servers A and B have their stored contents reflected in the service database server C in a suitably timed manner. However, installation of the service database server C is not mandatory; it may be replaced by any suitable arrangements allowing the service database servers A and B to share information therebetween.

In the setup of Fig. 1, each of the content providers A and B has a license server, a fee-charging server, a content server, and a service database server installed independently. Alternatively, part or all of the servers may be shared between the content providers. As another alternative, the content server owned by one content provider may be shared by the other content providers.

Although the content delivery system actually has numerous customers, the setup in Fig. 1 is shown having only one customer for purpose of simplification and illustration. This customer possesses a plurality of content reproduction apparatuses including clients A and B. Each client is designed to be "legitimate" according to DRM criteria. That is, the clients are designed to perform their processing without leaking encryption keys, content keys, and decrypted content to the outside.

The client A in the setup of Fig. 1 is assumed to have made registration with the content provider A in advance, so that the client A may have content provided and licenses granted by the provider A as desired. The client B is also assumed to have made advance registration with the content provider B, so that the client B may likewise have content provided and licenses granted by the provider B as desired.

Content can be moved from the client A to the client B in a number of ways. For example, content may be written by the client A to a recording medium that is moved physically to the client B. As another example, content data may be transmitted from the client A to the client B over what may called a personal network.

Whereas this embodiment utilizes user ID's for identifying users (as will be discussed later), it is also possible to use client ID's for identifying individual clients. Where the same user has different user ID's with different content providers, the user ID's are assumed to be associated with one another through the providers' service databases so that the providers know these user ID's in fact belong to the same user. It is assumed that the client ID's are also managed by the service databases A, B and C. Although this embodiment performs user authentication based on a user ID and a password, this is not limitative of the invention. Alternatively, each reproduction apparatus involved may be authenticated (called device authentication) by use of a client ID (device ID). As another alternative, user information may be handled on the basis of device authentication and user authentication combined.

The content delivery system of this embodiment presupposes the following:

(1) There is provided a copyright-managed environment that allows the use of delivered content by the customer to be restricted in scope as desired by the content provider or by the copyright holder of the content in question.

(2) In the copyright-managed environment above, encrypted content and licenses for decrypting the content can be handled separately.

(3) Each client is furnished with data processing means or steps for ensuring lawful management and protection of copyrights (i.e., each client is "legitimate").

(4) Different clients receive content from different content providers.

(5) Each client may have the received content stored therein or retained on a recording medium connectable to the client in question.

(6) Where a customer wants to have content shared between clients in his or her possession, the customer is able to move the content of interest between the clients in wired or wireless fashion.

(7) The content providers involved may swap or share their customer-related information among them (e.g., information about customers, information about clients owned by the customers, information about purchased content, etc.).

With the above preconditions satisfied, the content delivery system of this embodiment enables the content acquired by the client A to be stored (i.e., moved) into the client B before permitting the client B to receive a new license from a license server. This makes it possible for the clients A and B to share the content therebetween while protecting the copyright of the content. Detailed steps for sharing content will be discussed later.

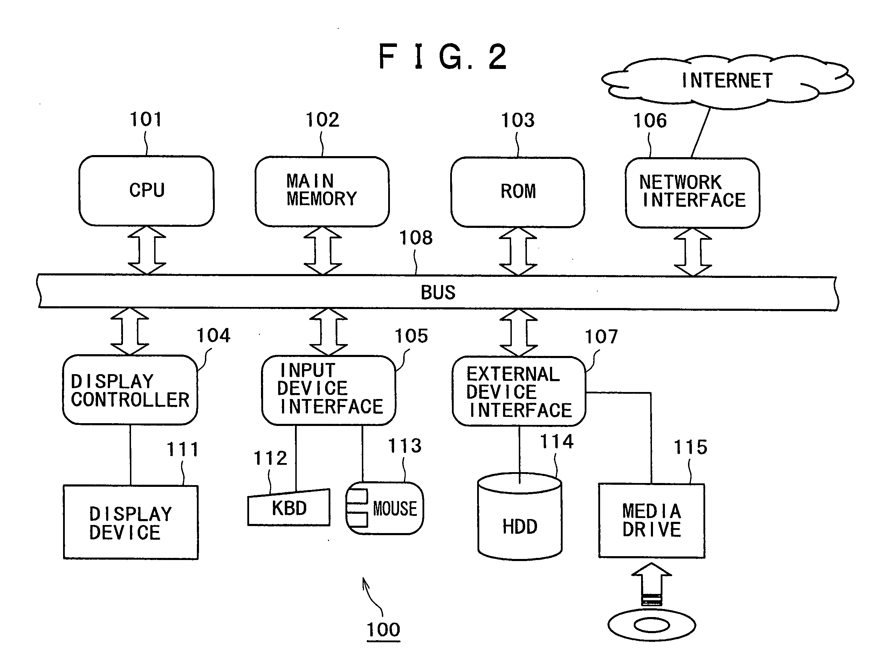

Fig. 2 schematically shows a hardware structure of a host device acting as a server or as a client in the content delivery system embodying the invention.

In the structure of Fig. 2, a CPU (central processing unit) 101 working as a main controller under an operating system (OS) carries out various application programs. If the host device acts as a client terminal, the CPU 101 executes client applications for addressing services including advance registration with content providers, downloading of content, acquisition of licenses, and storage of downloaded content. If the host device acts a server such as a license server, a content server, a fee-charging server, or a service database server, then the CPU 101 performs relevant server applications. As illustrated, the CPU 101 is interconnected with other devices (to be described later) by a bus 108.

A main memory 102 works as a storage device into which to load program codes for execution by the CPU 101 or into which to place temporarily work data for currently executing programs. Illustratively, a semiconductor memory such as a DRAM (dynamic RAM) is adopted as the main memory 102. If the host device acts as a client terminal, the CPU 101 loads into the main memory 102 executing programs made up of the client applications for addressing services including advance registration with content providers, downloading of content, acquisition of licenses, and storage of downloaded content. If the host device acts as a server (i.e., a license server, a content server, a fee-charging server, or a service database server), the CPU loads into the main memory 102 executing programs constituted by the relevant server applications.

A ROM (read only memory) 103 is a semiconductor memory that stores data permanently. For example, a self-diagnostic test program for use upon start-up (POST: Power On Self Test) and program code for hardware I/O control (BIOS: Basic Input/Output System) are written in the ROM 103.

A display controller 104 is dedicated to actually processing rendering instructions issued by the CPU 101. Rendering data processed by the display controller 103 are written to a frame buffer (not shown) before being output onto a display device 111. The display screen of the display device 111 feeds back visually to the user what has been input from the user, the results of the input having been processed (specifically, images of reproduced content), or system messages including error messages.

An input device interface 105 is a device that connects a keyboard 112, a mouse 113, and other user input devices to an interactive system 100.

A network interface 106 allows the system 100 to connect to a local network such as LAN (local area network) in keeping with a suitable communication protocol such as that of the Ethernet (registered trademark), and to connect to wide area networks such as the Internet. Alternatively, when attached to a terminal on board a vehicle, the network interface 106 may establish wireless connection channels (e.g., mobile phone channels) to wide area networks.

Over a network, a plurality of host terminals (not shown) may be connected transparently to make up a distributed computing environment. On such a network, software programs, data content and others may be delivered from one location to another by the content delivery service.

Illustratively, if the host device acts as a client terminal, it can download client applications for dealing with services such as advance registration with a content provider, downloading of content, acquisition of licenses, and storage of downloaded content. Over the network, the terminal can also download procedures for advance registration with a content provider, downloading of content from a content server, acquisition of licenses from a license server, and fee-charging processes for acquired licenses. Furthermore, source programs yet to be compiled and object programs having been compiled may be executed by way of the network. If the host device acts as a server such as a license server, a content server, a fee-charging server, or a service database server, then it can download various server applications over the network. In addition, the server may carry out procedures for advance registration with a customer's client terminal, delivery of content, granting of licenses, and fee-charging processes for granted licenses via the network.

An external device interface 107 is designed to connect such external devices as a hard disc drive (HDD) 114 and a media drive 115 to the host device 100.

The HDD 114 is an external storage device that accommodates a magnetic disc fixedly as a storage medium (as is well known). It is superior to most other external storage devices in terms of storage capacity and data transfer rate. In a procedure called "installation," software programs may be placed onto the HDD 114 in a ready-to-execute manner. Generally, the HDD 114 has the program codes of an operating system, application programs, and device drivers installed thereon in nonvolatile fashion and ready for execution by the CPU 101.

If the host device acts as a client terminal, it may install on the HDD 114 the client applications for addressing services such as advance registration with a content provider, downloading of content, acquisition of licenses, and storage of downloaded content. It is also possible for the client to store on the HDD 114 the content downloaded from a content provider (or moved from another client terminal by way of a storage medium or other suitable means) as well as licenses for the content. If the host device acts as a server such as a license server, a content server, a fee-charging server, or a service database server, then it can install the relevant server applications on the HDD 114. It is also possible for the server to store on the HDD 114 customer-related information necessary for the content delivery service (e.g., information about customers, information about clients owned by the customers, information about purchased content, etc.).

The media drive 115 is a device that accommodates a portable medium such as CD (Compact Disc), MO (MagnetoOptical disc), or DVD (Digital Versatile Disc) in a manner permitting access to the data recording surface of the medium.

The portable media are used mainly to back up software programs and data files in computer-readable form or for moving (i.e., marketing, distributing, or otherwise delivering) these software programs and data files from one system to another. For example, the portable media may be used to get the client applications or server applications for such services as advance registration with a content provider, downloading of content, acquisition of licenses, and storage of downloaded content, moved physically between a plurality of devices for distribution or delivery. The portable media may also be used to move between client terminals the content downloaded from a content provider. The portable media may further be used to let the content providers swap or share between them the customer-related information necessary for the content delivery service (e.g., information about customers, information about clients owned by the customers, information about purchased content, etc.).

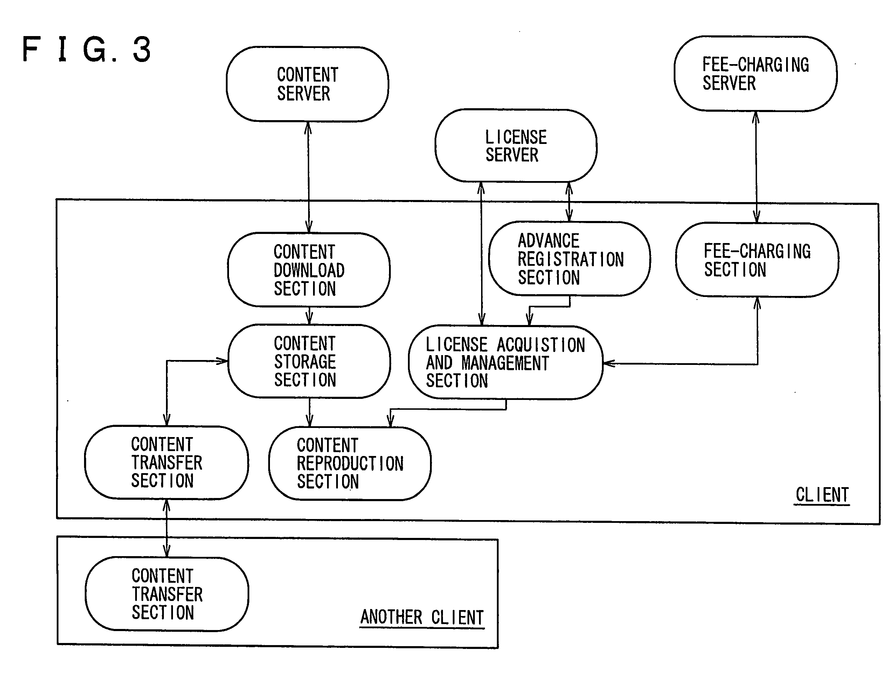

Fig. 3 schematically depicts a functional structure of the host device acting as a client. As illustrated, the client is made up of an advance registration section, a content download section, a content storage section, a content transfer section, a license acquisition and management section, a fee-charging section, and a content reproduction section. In practice, these sections or function modules are implemented by the CPU 101 executing relevant program modules.

The advance registration section permits the client advance registration with the license server of a specific content provider before the client receives content from that provider and be granted a license for the received content. Detailed steps of the advance registration will be discussed later.

The content download section downloads desired content from the content server of the content provider with which advance registration has been made. Generally, the user selects specific content on a browser screen of the client and starts downloading the selected content in the well-known manner which will not be discussed further. The downloaded content is stored in the content storage section.

The license acquisition and management section acquires from the license server a license necessary for using (i.e., reproducing) the content downloaded from the content server or moved in from another client of the same user through the content transfer section. The acquired licenses and the information obtained at the time of advance registration are managed by the license acquisition and management section. If any acquired license has expired, the license acquisition and management section carries out a license renewal process with the license server to get the license in question renewed. Detailed steps of the license acquisition and license renewal will be discussed later.

The fee-charging section connects to the fee-charging server of any content provider, and performs a fee-charging process paying for the license for using (i.e., reproducing) the content downloaded from the content server or acquired from another client of the same user through the content transfer section.

With this embodiment, a new license for using the same content acquired from another client of the same user via the content transfer section may be granted either on a chargeable basis or free of charge. If the license is chargeable, the price can be made lower than that in effect when the license in question was obtained for the first time. These considerations are determined at the discretion of the content provider and are reflected by the fee-charging server in its processing.

The content reproduction section retrieves desired content from the content storage section, decrypts or decodes the encrypted content data using the corresponding license held in the license acquisition and management section, and reproduces the decoded data. Specifically, the reproduction of content refers to outputting music data acoustically and outputting image data visually on the display device.

The content transfer section transfers content from one client to another in the possession of the same user. When moving content to another client, the content transfer section first retrieves the target content from the content storage section. The content transfer section then writes the content to a portable recording medium for physical transfer to the intended destination, or transmits the content electronically to the destination over wired or wireless communication channels. When acquiring content from another client, the content transfer section reads the target content from the loaded recording medium, or receives the content over wired or wireless communication channels. The content thus moved is stored into the content storage section.

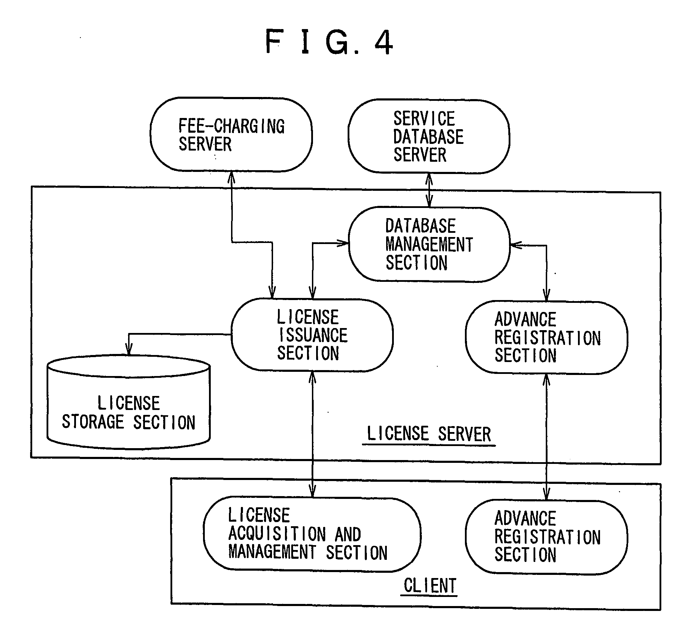

Fig. 4 schematically indicates a functional structure of the host device acting as a license server. As depicted, the license server is constituted by an advance registration section, a license issuance section, a license storage section, and a database management section. In practice, these sections or function modules are implemented by the CPU 101 executing relevant program modules.

The advance registration section allows the client to make advance registration with the server before the client utilizes the content delivery service of this content provider. Detailed steps of the advance registration will be discussed later.

The license storage section stores licenses necessary for the use of content provided by the content provider. Each relevant license may be retrieved through a search based on license designation information such as a license ID.

In response to a request from a client, the license issuance section retrieves from the license storage section a license necessary for the use of content downloaded from the server or moved from another client of the same user, and transmits the retrieved license to the requesting client. Whenever issuing a license, the license issuance section notifies the fee-charging server of the issue so as to charge the client for the license.

With this embodiment, a new license for using the same content acquired from another client of the same user via the content transfer section may be granted either on a chargeable basis or free of charge. If the license is chargeable, the price can be made lower than that in effect when the license in question was obtained for the first time. These considerations are determined at the discretion of the content provider and are reflected by the fee-charging server in its processing.

Furthermore, in response to a license renewal request from a client, the license issuance section renews a license that has expired. Detailed steps of the license renewal will be discussed later.

The database management section causes the service database to store and update details of advance registration made by the advance registration section as well as information about the licenses issued by the license issuance section.

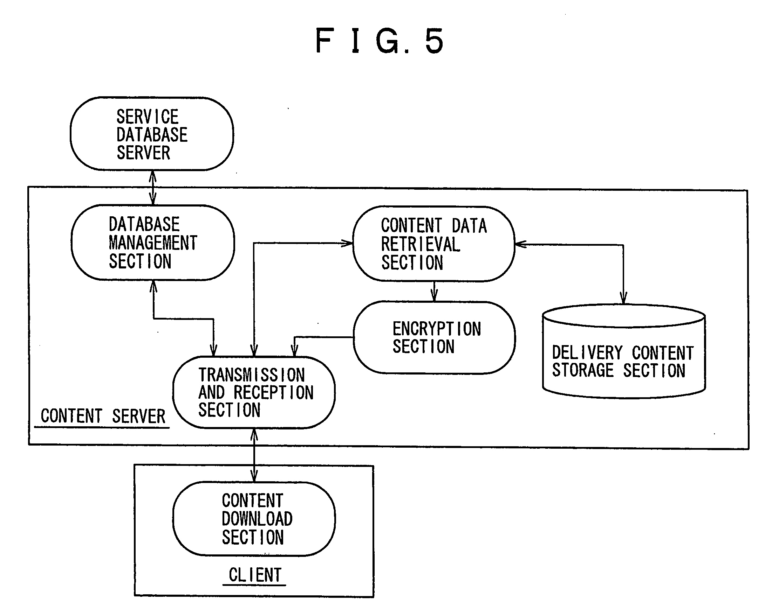

Fig. 5 schematically shows a functional structure of the host device acting as a content server. As illustrated, the content server includes a transmission and reception section, a delivery content storage section, a content data retrieval section, an encryption section, and a database management section. In practice, these sections or function modules are implemented by the CPU 101 executing relevant program modules.

The transmission and reception section receives a content request (i.e., content designation information) from a client and transmits the requested content data to the requesting client.

The delivery content storage section retains and manages content data to be delivered to clients by the content provider in the content delivery service. With this embodiment, the content data are stored in the delivery content storage section in a format encoded by ATRAC3 (Adaptive Transform Acoustic Coding Version 3).

The content data retrieval section analyzes content designation information received by the transmission and reception section, retrieves the designated content from the delivery content storage section, and transfers the retrieved content to the encryption section.

The encryption section encrypts the content destined for a client by use of a content key $K_c$.

The database management section causes the service database to store and update information about the past delivery of content to clients in the content delivery service.

Described below by referring again to Fig. 1 is how content is shared between the clients A and B owned and utilized by the same user. Before sharing content, the clients A and B gain access to the license servers A and B respectively for advance registration. Carrying out the advance registration enables each of the clients A and B to obtain "service data" including a leaf ID, DNK (device node key), a secret key paired with a public key for the client, a public key of the license server, and certificates of the public keys.

The leaf ID represents identification information assigned to each client. DNK stands for the device node key necessary for decrypting an encrypted content key $K_c$ contained in EKB (enabling key block) corresponding to the license of interest. The device node key (DNK) is described in the Description WO 02/080446 that has been assigned to this applicant. Details of DNK disclosed in the cited description are not directly applicable to the spirit or scope of this invention and thus will not be discussed further.

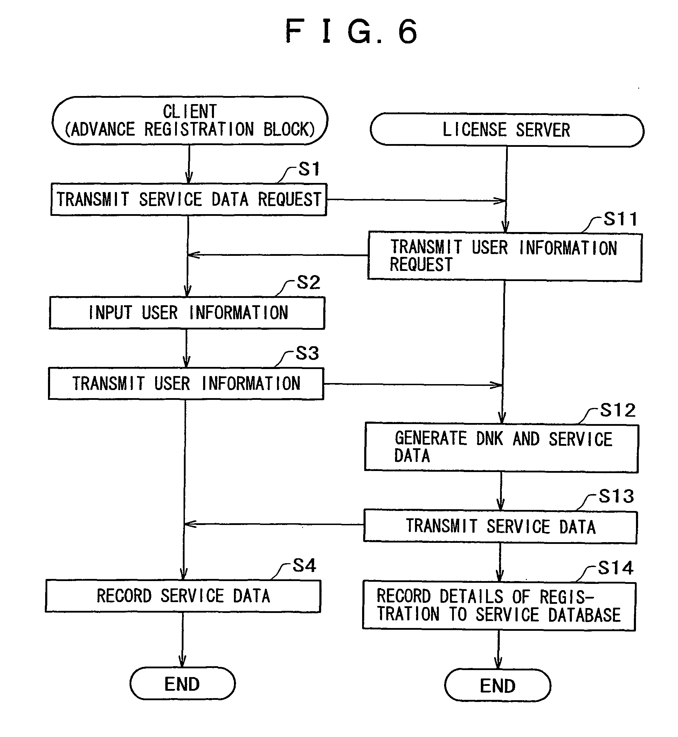

Fig. 6 is a flowchart of steps constituting the process in which a client makes advance registration with the license server. The steps are carried out as follows:

The client transmits a service data request to the license server of the content provider with which the client wants to register in advance for the service (step S1) .

In response to the service data request received from the client, the license server transmits a user information request to the requesting client (step S11).

On receiving the user information request, the client displays on the display device or like equipment a message and an entry screen prompting the user to input user information (step S2). By operating the input device such as a keyboard and a mouse, the user enters the user information including personal information and payment information, and transmits the input information to the license server (step S3).

Upon receipt of the user information, the license server assigns to the requesting client one of the unassigned leaves that come under the category allocated to the license server. The license server then generates as a device node key (DNK) a set of node keys assigned to the nodes on a path ranging from the assigned leaf to the node of the category allocated to the license server. Finally, the license server generates service data including the generated DNK, a leave ID of the leaf assigned to the client, a secret key paired with a public key for the client, a public key of the license server, and certificates of the public keys (step S12). The generated service data is transmitted to the requesting client (step S13).

Following transmission of the service data, the license server records the user information in correspondence with the leaf ID and stores the details of the advance registration into the service database (step S14).

On receiving the service data from the license server, the client encrypts the received data and stores the encrypted data in the license acquisition and management section (step S4).

In the manner described, the license server registers the client and its user, and the client is then entitled to receive the service data including the device node key necessary for utilizing the desired content delivery service.

With this embodiment, each of the service database servers A and B for the content providers has a plurality of tables listed below. Other subsystems such as the content server may utilize (i.e., reference, add to, or update) any of these tables as needed. The tables furnished to each service database server include:

(1) a table of correspondences between leaf ID's and client ID's;
(2) a table of correspondences between client ID's and user ID's;
(3) a table of correspondences between user ID's and user passwords;
(4) a table of correspondences between content ID's and license ID's;
(5) a table of correspondences between user ID's and the content ID's of the downloaded content (the table may also record the dates on which the content was downloaded and the license ID's associated with the downloaded content); and
(6) a table of correspondences between user ID's and the license ID's of the downloaded licenses (the table may also record the dates on which the licenses were downloaded).

The service database server C is set up to let the content providers involved share the information listed below from among the customer-related information held in the service database servers A and B. The content providers A and B may reference or update the shared information as needed. The shared information includes:

(1) the table of correspondences between leaf ID's and client ID's;
(2) the table of correspondences between client ID's and user ID's;
(3) the table of correspondences between content ID's and license ID's;
(4) the table of correspondences between user ID's and the content ID's of the downloaded content (the table may also record the dates on which the content was downloaded and the license ID's associated with the downloaded content); and
(5) the table of correspondences between user ID's and the license ID's of the downloaded licenses (the table may also record the dates on which the licenses were downloaded).

The content delivery system of this embodiment allows the content acquired by the client A to be moved to the client B (for storage) and permits the client B to receive a new license for using the moved content from the server, thereby enabling the clients A and B to share the content while protecting the copyright of the content in question. Content is typically shared between clients in steps P1 through P6 as indicated in Fig. 1 and as outlined below.

P1: Content is first downloaded.
P2: A license for the content is downloaded and the content is reproduced.
P3: Relevant information is updated between the service databases involved.
P4: The content is moved to another client.
P5: A new license for the moved content is downloaded and the moved content is reproduced.
P6: Relevant information is updated between the service databases involved.

Each of the steps above is described in more detail.

Downloading of content:

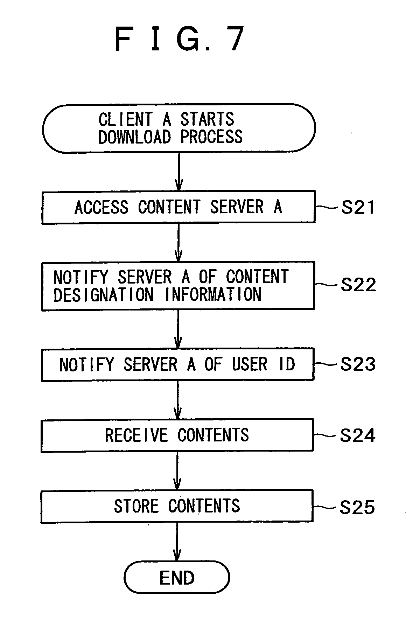

Fig. 7 is a flowchart of steps constituting the process in which the client A downloads content. The steps are carried out as follows:

The user starts up a content download process by manipulating the display screen using the keyboard, mouse, or some other suitable input device. In turn, the client gains access to the content server A through the network interface 106 (step S21).

The access to the content server A causes a content selection screen (not shown) to appear on the display screen of the client A. On this screen, the user designates desired content using the keyboard, mouse, or some other suitable input device. The client A notifies the content server A of information for designating the desired content (step S22). The client A further notifies the content server A of a user ID entered by the user (step S23) .

In response to the content designation information, the content server A encrypts the corresponding content and transmits the encrypted content, as will be discussed later. The client A receives the encrypted content (step S24) and stores what is received into the content storage section (step S25).

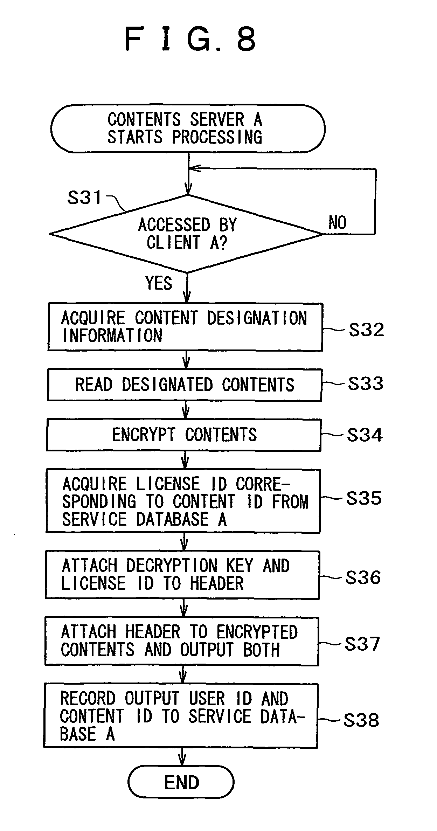

Fig. 8 is a flowchart of steps constituting the process performed by the content server allowing content to be downloaded. The steps are carried out as follows:

The content server A waits for an attempt to access by the client A (step S31). When accessed by the client A, the content server A acquires information for designating content from the client A (step S32). The content designation information corresponds to the information sent by the client A in step S22 in the flowchart of Fig. 6.

The content server A retrieves from the stored content the content designated by the information acquired earlier in step S32 (step S33).

The content server A encrypts the retrieved content using a content key $K_c$ (step S34). Because the content data in the delivery content storage section have been encoded by ATRAC3, the encoded content data are further encrypted. If the content data had been encrypted before they were placed in the delivery content storage section, step S34 may be skipped.

The content server A acquires from the service database server A a license ID corresponding to the content ID (step S35). The content server A then adds key information (to be described later) necessary for decrypting the encrypted content, and the license ID of the license needed to use the content, to a header constituting part of a format in which the encrypted content data is to be transmitted (step S36).

The content encrypted in step S34 and the header supplemented with the key and license ID in step S36 are then transmitted to the requesting client A in the appropriate format (step S37).

Lastly, the content server A records the user ID of the client A and the content ID of the transmitted content to the service database A (step S38). The records in the service database A are reflected in the service database C through a suitable synchronizing process, so that these records can be referenced by the content provider B as well.

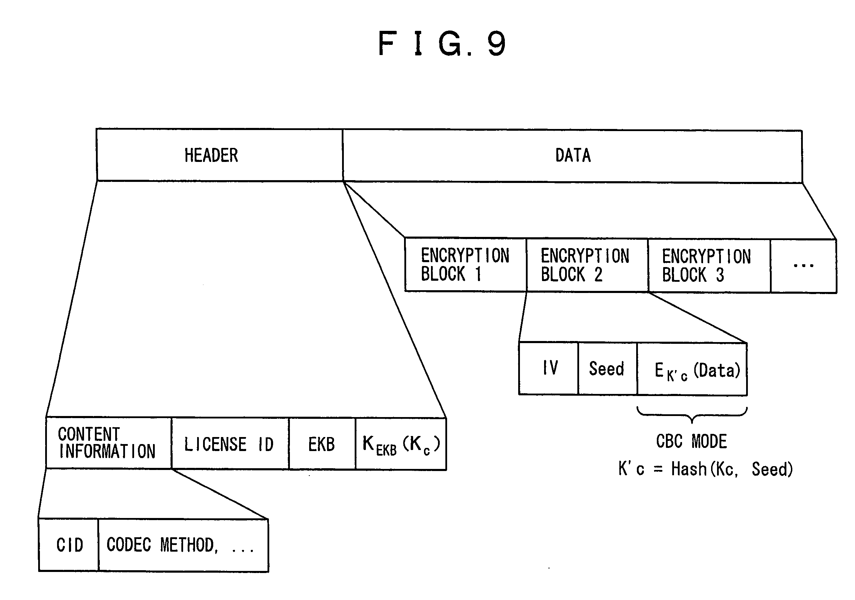

Fig. 9 is a schematic view of a typical data format in which the content server A delivers content to the client A. As illustrated, the format is made up of a header and a data part.

The header includes content information, a license ID, an enabling key block (EKB), and data $K_{EKB}$ $(K_C)$ constituting a content key $K_c$ encrypted by use of a key KEKB derived from EKB. EKB is described in the Description WO 02/080446 that has been assigned to this applicant. Details of EKB disclosed in the cited description are not directly applicable to the spirit or scope of this invention and thus will not be discussed further.

The content information includes a content ID (CID) serving as identification information for identifying the formatted content data. Also included in the content information is information such as a CODEC method for coding and decoding the content in question.

The data part is formed by any number of encryption blocks. Each encryption block is composed of an initial vector (IV), a seed, and data $E_{K'_c}(Data)$ obtained by encrypting the content data using a key $K'_c$.

The key $K'_c$ is constituted by the content key $K_c$ and by a value obtained by applying a hash function to the randomly generated seed, as indicated by the following expression:

$$K'_c = Hash (K_c, Seed)$$

The initial vector IV and the seed are set for different values for each encryption block.

The content data is encrypted in increments of eight bytes. Each eight-byte block is encrypted by use of the preceding encrypted eight-byte data in CBC (cipher block chaining) mode.

Where CBC mode is in use, the first eight-byte content data is encrypted using the initial vector IV as the initial value. That is because the preceding encrypted eight-byte data block does not exist before the first eight-byte content data.

If any one encryption block were somehow decrypted by an unscrupulous third party, the CBC mode encryption scheme still protects the other blocks from getting decrypted likewise. The encryption procedure involved is described in the Description WO 02/080446 that has been assigned to this applicant. Details of the procedure disclosed in the cited description are not directly applicable to the spirit or scope of this invention and thus will not be discussed further. Other encryption schemes may be adopted instead. Illustratively, the content data may be encrypted simply by use of the content key K_c.

In the manner described, the client A may acquire content from the content server A as desired. However, to use (i.e., reproduce) the content thus obtained requires that a license be obtained by each client before the use. This embodiment allows content to be delivered free of charge; only the license for using the content is offered on a chargeable basis. This makes it possible to distribute large quantities of free content in a copyright-protected manner.

Downloading of license and reproduction of content:

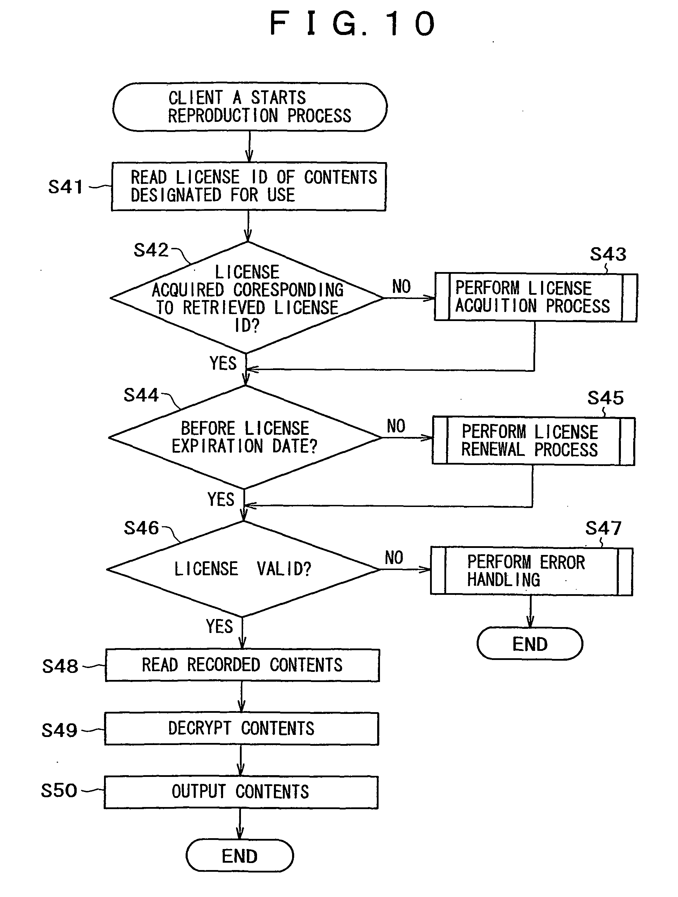

Fig. 10 is a flowchart of steps constituting the process in which the client A reproduces downloaded content. The steps are carried out as follows:

The client A first acquires content identification information (CID) designated by the user operating the keyboard, mouse, or some other suitable input device (step S41). The identification information is illustratively composed of a title, a serial number, or other appropriate information attached to each individual piece of the content in storage.

When the desired content is designated, the client A reads the license ID (i.e., identification information necessary for using content) corresponding to the designated content. As shown in Fig. 9, the license ID is described in the header of the encrypted content data.

The client A then determines whether or not the license corresponding to the retrieved license ID has already been acquired and stored in the license acquisition and management section (step S42). If the applicable license has yet to be acquired, step S43 is reached in which a license acquisition process (to be discussed later) is performed.

If the license is found to have been acquired in step S42, or if the license acquisition process is carried out in step S43, the client A determines whether or not the current date of the license comes before the license expiration date (step S44). The determination of step S44 is carried out by comparing the expiration date (to be described later) stipulated as part of the license with the current time of day counted by a system timer of the client A.

If the license is found to have expired, step S45 is reached. In step S45, a license renewal process (to be discussed later) is carried out.

If the current date of the license comes before its expiration date in step S44, or if the license is renewed in step S45, the client A determines whether or not the license is valid (step S46). The validity of the license is determined by verifying an electronic signature (to be described latter) included in the license. If the license is not found to be valid, error handling is carried out (step S47) before this processing routine is brought to an end. The error handling may involve acquiring a valid license.

If the license is found to be valid in step S46, the client A reads the corresponding encrypted content data from the content storage section (step S48). Using the content key K_c, the client A decrypts the encrypted content data in increments of encryption blocks as shown in Fig. 9 (step S49).

The client A decodes the decrypted content data for content reproduction (step S50). The process of content reproduction refers to outputting music data acoustically and outputting image data visually on the display device.

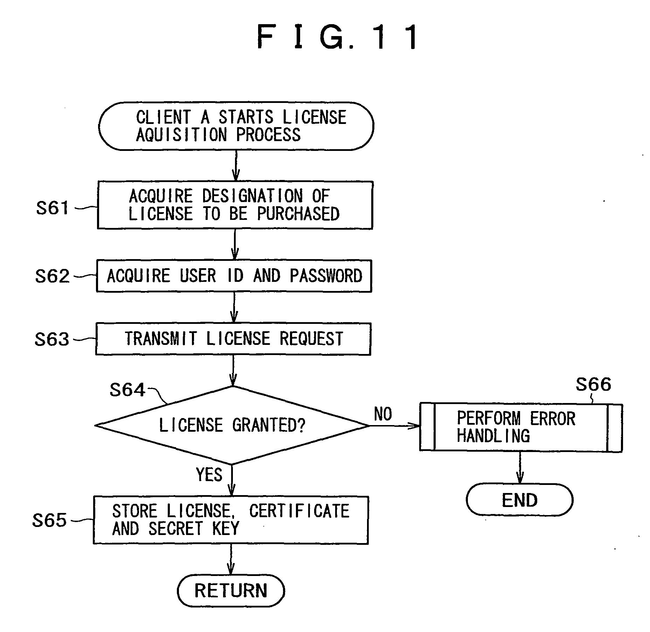

Fig. 11 is a flowchart of detailed steps constituting the license acquisition process performed by the client A in step S43 of Fig. 10. The steps are carried out as follows:

It is assumed that the client A accesses and registers with the license server A in advance so as to acquire therefrom the service data including a leaf ID, DNK (device node key), a secret key paired with a public key for the client A, a public key of the license server, and certificates of the public keys (see the foregoing description with reference to Fig. 6).

The leaf ID represents identification information assigned to each client. DNK stands for the device node key necessary for decrypting an encrypted content key K_c contained in EKB (enabling key block) corresponding to the license of interest.

The client A first acquires information for designating the license to be renewed, a user ID, and a password entered by the user operating the keyboard, mouse, or some other suitable input device (steps S61 and S62) .

The client A then transmits to the license server B a license request including the entered user ID, password, license designation information, and the leaf ID contained in the service data (step S63).

The license server A issues a license based on the user ID, password, and license designation information, and transmits the issued license to the requesting client A. The license granting process performed by the license server A will be discussed later in more detail.

If the license is received from the license server A (step S64), the client A stores the received license into the license acquisition and management section (step S65) .

If the license is not received from the license server A (step S64), the client A performs error handling (step S66) and terminates this processing routine. The error handling here illustratively involves inhibiting the start-up of the content reproduction section because the license for using the content is not available.

In the manner described above, the client A can use the content after acquiring the license corresponding to the license ID attached to the content data. The license acquisition process shown in Fig. 11 may alternatively be carried out prior to the downloading of content, not after.

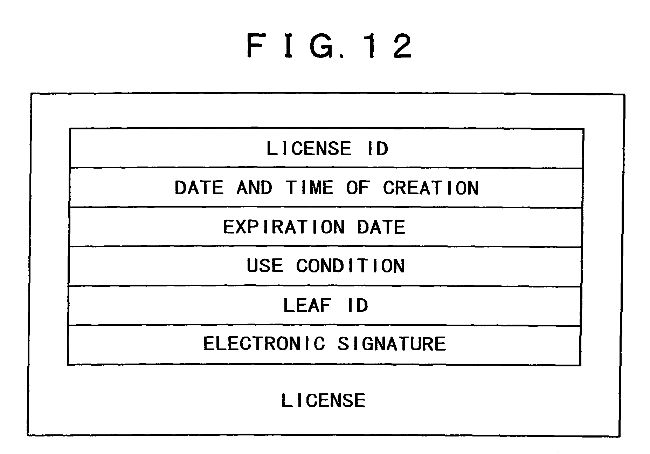

Fig. 12 schematically shows a data structure of a license granted by the license server to a client. As illustrated, the license includes in its data structure a use condition, a leaf ID, and an electronic signature of the license server.

The use condition includes: a use limit on the extent of use of the content based on the license; a download limit on the extent of download of the content based on the license; an allowable copy count specifying the maximum number of times the content can be copied based on the license; the current check-out count; a maximum allowable check-out count; the right to record the content on a recording medium such as CD-R based on the license; the maximum number of times the content can be copied to a portable recording medium; the right to turn the license into ownership (i. e., the right to buy); and information specifying the user's obligation to keep a usage log.

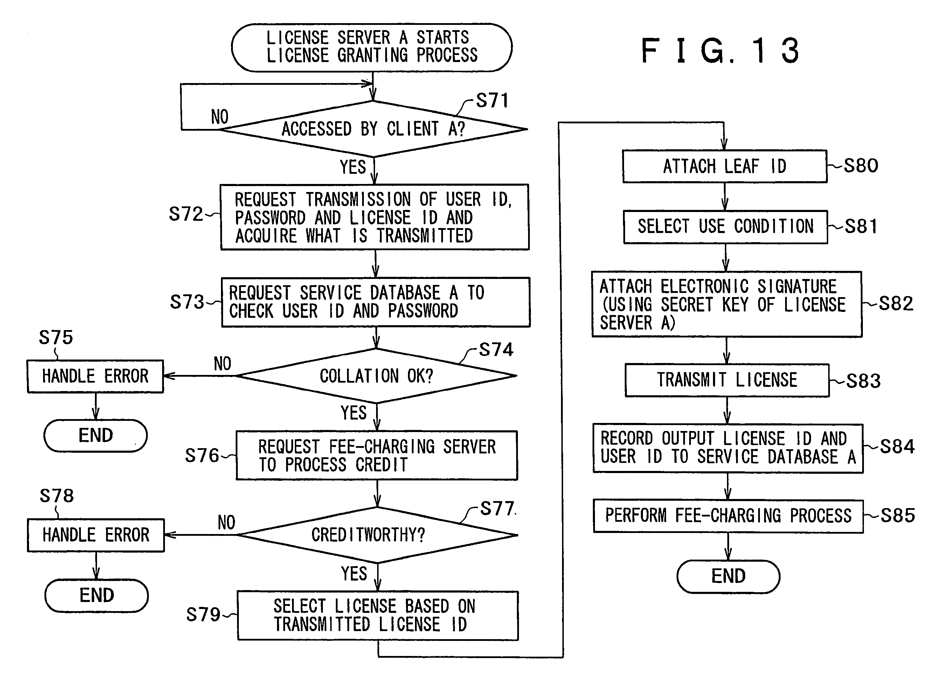

Fig. 13 is a flowchart of steps constituting the process in which the license server A grants a license to the client A in response to a license request from the client A (step S63 in Fig. 11). The steps are carried out as follows:

The license server A waits for an attempt to access by the client A (step S71). When accessed by the client A, the license server A requests the client A to transmit a user ID, a password, and a license ID. In turn, the client A goes to step S63 and transmits the user ID, password, leaf ID, and license designation information (license ID) to the license server A. The license server A acquires all that has been transmitted (step S72).

The license server A then requests the service database server A to check the user ID and password (step S73) to see if the client A is legitimate (step S74). If the check is unsuccessful, the license server A performs error handling (step S75) and brings this processing routine to an end. In this case, no license is issued to the client A.

If the check in step S74 turns out to be successful, the license server A accesses the fee-charging server A to request credit processing (step S76). In response to the credit processing request from the license server A, the fee-charging server A examines the past payment history corresponding to the user ID and password, to check whether the user in question committed nonpayment or other irregularities in paying for licenses in the past (step S77).

If the user is not found creditworthy as a result of the check, the fee-charging server A notifies the license server A that granting of the license is not allowed because of the lack of creditworthiness on the user's part. In response, the license server A performs error handling (step S78) and terminates this processing routine. In this case, too, no license is issued to the client A.

If the user is found creditworthy, then the license server A retrieves the license corresponding to the license designation information from the license storage section (step S79). Each of the licenses held in the license storage section is associated beforehand with information describing a corresponding license ID, an applicable version number, a date and time of creation, and an expiration date. The license server A attaches a leaf ID to the retrieved license (step S80).

The license server A selects the use condition associated with this license (step S81). If a use condition was designated by the user making the request for the license, the designated use condition is added as needed to the previously provided use condition. The use conditions thus selected are attached to the license.

The license server A puts an electronic signature to the license using its own secret key, thereby generating the license as shown in Fig. 12 (step S82). The license thus generated is transmitted to the requesting client A (step S83).

The license server A stores the transmitted license (including its use conditions and leaf ID) in correspondence with the user ID and password. The license server A further accesses the service database server A to record therein the license ID of the transmitted license in association with the user ID (step S84). The recorded contents in the service database A are reflected in the service database C through a synchronization process, so that these recorded contents can be accessed by the content provider B as well.

Finally, the license server A accesses the fee-charging server A to request a fee-charging process regarding the user corresponding to the user ID and password (step S85). In response to the fee-charging process request, the fee-charging server A settles the credit with the applicable user. Specifically, the fee-charging server A may settle the credit using a credit card or a debit card, by accepting payment from the user in electronic money or in cash, or through a bank transfer by the user. How the fee-charging process is accomplished is not directly applicable to the spirit or scope of this invention and thus will not be discussed further.

If the user fails to make the necessary payment at the time of the fee-charging process, the user loses his or her creditworthiness. The user is thereafter denied the granting of any requested license. With the user found deprived of creditworthiness, the fee-charging server returns to the license server A the result of the credit processing saying that the granting of license should be refused. In response, the license server A performs error handling in step S78 and terminates the processing routine. The requesting client does not receive the license and thus will not be able to use (i.e., decrypt) the content.

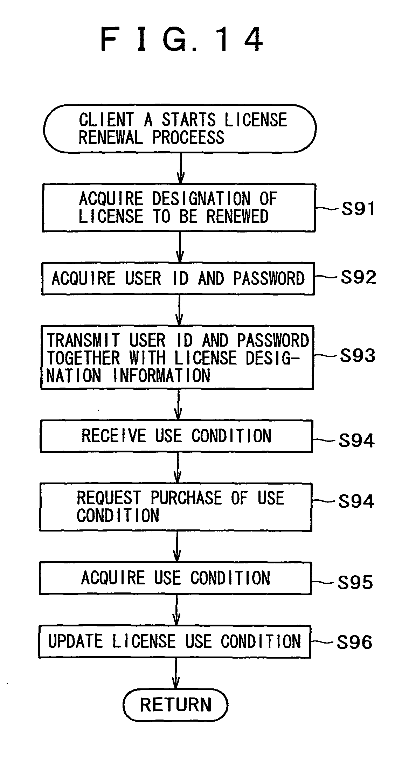

Fig. 14 is a flowchart of detailed steps constituting the license renewal process carried out by the client A in step S45 of Fig. 10. The steps are performed as follows:

The client A first acquires license designation information, a user ID, and a password entered by the user operating the keyboard, mouse, or some other suitable input device (steps S91 and S92).

The client A transmits to the license server a license renewal request including the user ID, password, and license designation information input by the user (step S93).

In response to the license renewal request, the license server A presents use conditions (to be discussed later). The client A receives the presented use conditions and gets the received conditions displayed on the screen for the user to examine (step S94).

By operating the keyboard, mouse, or some other suitable input device, the user selects some of the displayed use conditions or adds a new use condition to the existing conditions. The client A then sends to the license server A (step S95) a request to purchase the use conditions thus selected (i.e., conditions for renewing the license).

In response to the purchase request from the client A, the license server A transmits finalized use conditions (to be discussed later). The client A receives the use conditions from the license server A (step S96) and renews the license on the basis of the received use conditions (step S97).

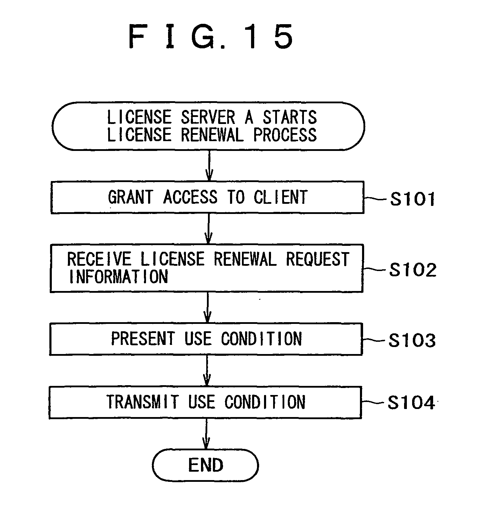

Fig. 15 is a flowchart of detailed steps constituting the process performed by the license server in step S45 of Fig. 10 allowing a license past its expiration date to be renewed. The steps are carried out as follows:

When accessed by the client A (step S101), the license server A receives the license renewal request (mentioned above) from the client A (step S102).

The license server A reads from the license storage section the use conditions (i.e., use conditions to be renewed) corresponding to the license whose renewal is being requested. The retrieved use conditions are transmitted to the requesting client A (step S103).

The client A causes the received use conditions to be displayed on the screen for the user to examine. By operating the keyboard, mouse, or some other suitable input device, the user selects some of the displayed use conditions or adds a new use condition to the existing conditions. The client A then sends to the license server A (as described above) the request to purchase the use conditions thus selected (i.e., conditions for renewing the license).

In response to the use condition purchase request from the client A, the license server A generates data corresponding to the requested use conditions and transmits the generated data to the client A (step S104). The client A receives the use conditions from the license server A and renews the license on the basis of the received conditions (as described above).

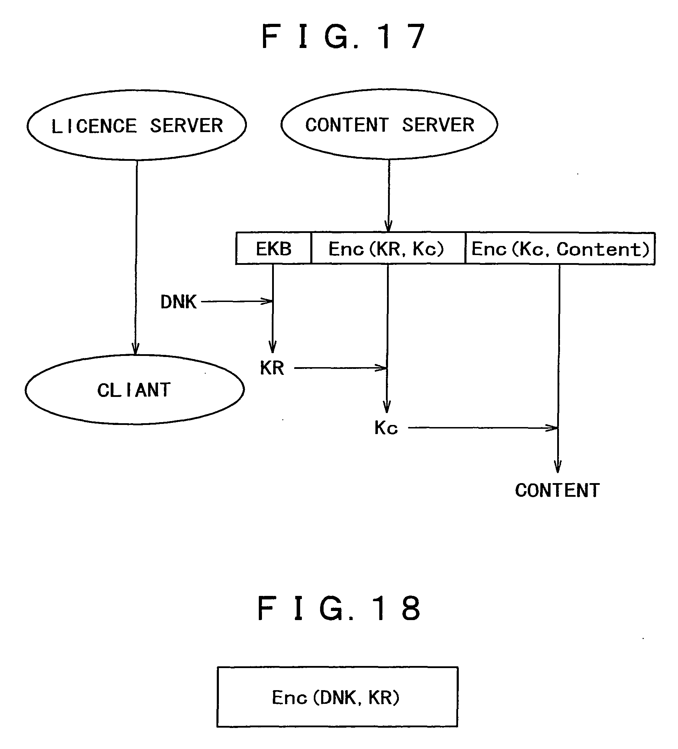

Described below with reference to Fig. 17 is how a client uses content supplied by the content server on the basis of a license granted by the license server. The scheme is summarized as follows:

Content is furnished by the content server to the client, while a license is granted by the license server to the client for the furnished content. The content is encrypted (Enc($K_c$,Content) by use of a content key $K_c$. The content key $K_c$ is in turn encrypted (Enc(KR,$K_c$)) using a root key KR (which is derived from EKB and corresponds to key $K_{EKBC}$ in the content data shown in Fig. 9). The content key thus encrypted is attached to the content along with EKB before being supplied to the requesting client.

EKB shown in Fig. 17 includes the root key KR that may be decrypted using DNK, as shown in Fig. 18 (Enc(DNK,KR)). Thus the client may obtain the root key KR from EKB using DNK contained in the service data. The client can decrypt the content key $K_c$ from the data Enc(KR,$K_c$) using the root key KR. In turn, the content key $K_c$ may be used to decrypt the content from the encrypted content Enc($K_c$,Content).

Updating of information between service databases:

Whenever content or a license is downloaded from the content provider A to the client A, information about the download is recorded to the service database A set up by the content provider A. In the content delivery system of this embodiment, any updated information in the service database A is reflected in the service database C so that the information may be shared between the content providers A and B. This type of collaboration in business enables the content providers A and B in the content delivery system to let the clients A and B of the same customer share content therebetween.

When content or a license has been downloaded from the content provider A to the client A, the service databases A and C update corresponding entries in the following tables:

> (1) the table of correspondences between leaf ID's and client ID's;
> (2) the table of correspondences between client ID's and user ID's;
> (3) the table of correspondences between content ID's and license ID's;
> (4) the table of correspondences between user ID's and the content ID's of the downloaded content (the table may also record the dates on which the content was downloaded and the license ID's associated with the downloaded content); and
> (5) the table of correspondences between user ID's and the license ID's of the downloaded licenses (the table may also record the dates on which the licenses were downloaded).

Transfer of content to another client:

The content downloaded to the client A may be moved to the client B for use by the latter. Upon movement of the content, it is not yet necessary for the client B to obtain the license for using the content.

In the setup of Fig. 1, the content downloaded to the client A is first copied to a portable recording medium. The recording medium with the content copied thereon is loaded physically into the client B to move the content to the latter.

In the case above, the client A reads the content of interest from its content storage section and writes the retrieved content to the recording medium. The client B reads the copied content from the recording medium and stores the content into its content storage section. These steps of data processing are carried out in well-known technique and thus will not be described further.

The method of moving unlicensed content from one client to another is not limited to the above-described one. Alternatively, the same user on his or her own initiative may transfer content in a wired or wireless communication from one client to another in his or her possession. As another alternative, when a client owned by a given user purchases content from a given content provider, that provider may automatically deliver the same content to another client of the same user.

Downloading of license for the content moved from another client and reproduction of the moved content:

The client B may download a license for the content moved from the client A so as to reproduce the moved content. The client B can reproduce the content by following the steps shown in Fig. 10.

The client B first acquires content identification information (CID) designated by the user operating the keyboard, mouse, or some other suitable input device (step S41). When the content is designated, the client B reads a license ID (i.e., identification information necessary for using content) corresponding to the content in question.

The client B then determines whether or not the license corresponding to the retrieved license ID has already been acquired by the client B and stored in its license acquisition and management section (step S42). If the applicable license has yet to be acquired, step S43 is reached for the license acquisition process. The client B carries out the license acquisition process by following the steps shown in Fig. 11. The data structure of the license is illustrated in Fig. 12.

If the license is found to have been acquired in step S42, or if the license is obtained following the license acquisition process carried out in step S43, the client B determines whether or not the current date of the license comes before the license expiration date (step S44).

If the license is found to have expired, step S45 is reached for the license renewal process. In step S45, the client B carries out the license renewal process by following the steps shown in Fig. 14.

If the current date of the license is found to come before its expiration date in step S44, or if the license is renewed in step S45, the client B determines whether or not the license is valid (step S46). If the license is not found to be valid, error handling is carried out (step S47) before this processing routine is brought to an end.

If the license is found to be valid in step S46, the client B reads the corresponding encrypted content data from the content storage section (step S48). Using the content key $K_C$, the client B decrypts the encrypted content data in increments of encryption blocks as shown in Fig. 9 (step S49).

The client B decodes the decrypted content data for content reproduction (step S50).

In step S43, the client B performs the license acquisition process by following the steps shown in Fig. 11. The steps are carried out as follows:

The client B first acquires information for designating the license to be renewed, a user ID, and a password entered by the user (steps S61 and S62).

The client B then transmits to the license server B a license request including the entered user ID, password, license designation information, and the leaf ID contained in the service data, the client B having registered beforehand with the license server B (step S63).

The license server B issues a license based on the user ID, password, and license designation information, and transmits the issued license to the requesting client B. The license granting process performed by the license server B will be discussed later in more detail.

If the license is received from the license server B (step S64), the client B stores the received license, certificate, and secret key into the license acquisition and management section (step S65).

If the license is not received from the license server B (step S64), the client B performs error handling (step S66) and terminates this processing routine.

In the manner described above, the client B can use the content moved from the client A only after acquiring the license corresponding to the license ID attached to the content data.

Following step S63 of Fig. 11 in which the client B issues the license request, the license server B performs the process of granting the requested license to the client B. Because the request is for the license about the content supplied by the content provider A, the license server B does not have the license in question. In that case, the license server B acquires the license from the content provider A by taking advantage of the business collaboration between the content providers A and B, before granting the acquired license to the client B. Any information necessary for generating the license is obtained by the license server B from the content provider A.

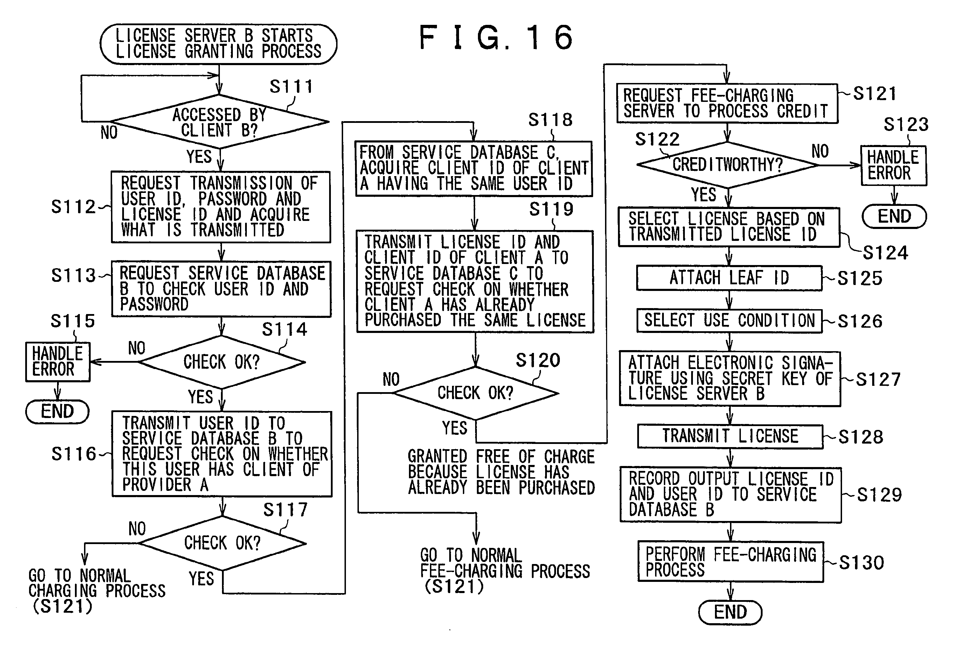

Fig. 16 is a flowchart of steps constituting the process in which the license server B grants a license in response to a license request from the client B in collaboration with another content provider. The steps are carried out as follows:

The license server B waits for access by the client B (step S111). When accessed by the client B, the license server B requests the client B to transmit a user ID, a password, and a license ID. In response, the client B transmits the user ID, password, leaf ID, and license designation information (license ID) in step S63 of Fig. 11. The license server B acquires all that has been transmitted (step S112).

The license server B then requests the service database server B to check the user ID and password (step S113) to see whether or not the client B is legitimate (step S114). If the check is unsuccessful, the license server B performs error handling (step S115) and terminates this processing routine. In this case, no license is issued to the client B.

If the check turns out to be successful, the license server B transmits the user ID to the service database server B and requests the latter to check whether or not this user possesses a client having registered with the content provider A (steps S116 and S117).

If the check on the user is unsuccessful, the license server B finds this request to be a normal license acquisition request from the client B. In this case, the license server B goes from step S117 to step S121 for a normal fee-charging process involved with the purchase of a license.

If the check on the user turns out to be successful, then the license server B accesses the service database server C that retains information about the customers having registered with the content providers A and B. From the service database server C, the license server B acquires the client ID of the client A having the same user ID (step S118).

The license server B transmits the license ID and the client ID of the client A to the service database server C. In so doing, the license server B requests the service database server C to determine whether or not the client A has already purchased the license for the content that is about to be used by the client B (step S119). A check is thus made to see whether or not the client A, from which the content has been moved, has the applicable license (step S120).

If the check on the client A about possession of the license is unsuccessful, the license server B finds this request to be a normal license acquisition request from the client B. In this case, the license server B goes from step S120 to step S121 for the normal fee-charging process involved with the purchase of a license.

If the check in step S120 turns out to be successful, that means the user has already purchased the license for the same content. In that case, a new license is granted free of charge or at a discount, before the next step is reached.

In step S121, the license server B accesses the fee-charging server B to request credit processing. In response to the credit processing request from the license server B, the fee-charging server B examines the past payment history corresponding to the user ID and password, to check whether the user in question committed nonpayment or other irregularities in paying for licenses in the past (step S122).

If the user is not found creditworthy as a result of the check, the fee-charging server B notifies the license server B that granting of the license is not allowed because of the lack of creditworthiness on the user's part. In response, the license server B performs error handling (step S123) and terminates this processing routine. In this case, too, no license is issued to the client B.

If the user is found creditworthy, then the license server B accesses its license storage section and retrieves the license corresponding to the license designation information therefrom (step S124). Each of the licenses held in the license storage section is associated beforehand with information describing a corresponding license ID, an applicable version number, a date and time of creation, and an expiration date. The license server B attaches a leaf ID to the retrieved license (step S125).

The license server B selects the use condition associated with this license (step S126). If a use condition was designated by the user making the request for the license, the designated use condition is added as needed to the previously provided use condition. The use conditions thus selected are attached to the license.

The license server B puts an electronic signature to the license using its own secret key, thereby generating the license as shown in Fig. 12 (step S127). The license thus generated is transmitted to the requesting client B (step S128).

The license server B stores the transmitted license (including its use conditions and leaf ID) in correspondence with the user ID and password. The license server B further accesses the service database server B to record therein the license ID of the transmitted license in association with the user ID (step S129). The records in the service database A are reflected in the service database C through a synchronization process, so that these records can be accessed by the content provider B as well.

Finally, the license server B accesses the fee-charging server B to request a fee-charging process regarding the user corresponding to the user ID and password (step S130). In response to the fee-charging process request, the fee-charging server B settles the account with the applicable user.

With this embodiment of the invention, the license for the content obtained from another client of the same user may be granted on a chargeable basis or free of charge. If the license is chargeable, the price can be made lower than that in effect when the license in question was obtained for the first time. These considerations are determined at the discretion of the content provider and are reflected by the fee-charging server in its processing.

Updating of information between service databases:

Whenever a license is downloaded from the content provider B to the client B for use of the content moved from the client A, information about the download is recorded to the service database B set up by the content provider B. In the content delivery system of this embodiment, any updated information in the service database B is reflected in the service database C so that the information may be shared between the content providers A and B. This type of collaboration in business enables the content providers A and B in the content delivery system to let the clients A and B of the same customer share content therebetween.

When a license has been downloaded from the content provider B to the client B, the service databases B and C update corresponding entries in the following tables:

(1) the table of correspondences between leaf ID's and client ID's;
(2) the table of correspondences between client ID's and user ID's;
(3) the table of correspondences between content ID's and license ID's; and
(4) the table of correspondences between user ID's and the license ID's of the downloaded licenses (the table may also record the dates on which the licenses were downloaded).

Addendum:

It is to be understood that while the invention has been described in conjunction with a specific embodiment, it is evident that many alternatives, modifications and variations will become apparent to those skilled in the art in light of the foregoing description. Accordingly, it is intended that the present invention embrace all such alternatives, modifications and variations as fall within the spirit and scope of the appended claims.

Industrial Applicability

This invention provides a content delivery system, an information processing apparatus or method, and a computer program for enabling a user, having purchased a license, to use the licensed content on a plurality of his or her apparatuses while preventing illegal content uses.

According to the invention, it is possible for any one of the user's clients, each connectable to a different content provider, to purchase content from a given provider and share the purchased content with another client of the same user. In this case, whether any other client may use the content on a chargeable basis or free of charge will be determined by the content providers and copyright holders at their own discretion.

Also according to the invention, if the content purchased by a first client is shared by a second client for a fee, that fee is paid solely by the second client without implicating the first client. The simplified procedure is convenient for the user possessing the two clients.

According to the invention, when one client of the user establishes or updates information about the reproducing environment (a play list, reproduction preferences such as volume and continuous playback, GUI screen settings, bookmarks of songs to be purchased, etc.), such information can be reflected in any other client of the same user.

**Claims**

1. A content delivery system for delivering content to a client of a user who possesses at least two clients, each of said clients using content legitimately based on an acquired license, said content delivery system comprising:

registering means for registering each of said clients of said user in order to acquire customer-related information;
customer-related information managing means for managing said customer-related information;
content providing means which, in response to a request from any one of said clients, provides content to the requesting client;
first license granting means which, in response to a request from the client having acquired the content from said content providing means, grants said requesting client a license for the acquired content; and
second license granting means which, after said user has moved the content from one client to another in the possession of the same user, grants said user a license for the moved content.

2. A content delivery system according to claim 1, wherein said customer-related information managing means manages a table of correspondences between leaf ID's and client ID's, a table of correspondences between client ID's and user ID's, a table of correspondences between content ID's and license ID's, a table of correspondences between user ID's and the content ID's of downloaded content, and a table of correspondences between user ID's and the license ID's of downloaded licenses.

3. A content delivery system according to claim 1, wherein said customer-related information managing means updates said customer-related information every time said content providing means provides content to a client and/or any one of said first and said second license granting means grants a license to a client.

**4.** A content delivery system according to claim 1, wherein, in response to a request from a client for a license, said second license granting means acquires the requested license from said first license granting means and returns the acquired license to the requesting client.

**5.** A content delivery system according to claim 4, wherein said second license granting means, by querying said customer-related information managing means, verifies that said requesting client is legitimate, that the same user possessing said requesting client is in possession of another client registered with said first license granting means, and that the requested license has already been granted to said another client by said first license granting means.

**6.** A content delivery system according to claim 1, further comprising fee-charging means for performing a fee-charging process regarding the client to which a license has been granted.

**7.** A content delivery system according to claim 5, wherein said fee-charging means makes a difference in charges between a case in which said first license granting means grants a license to a client downloading content, and a case in which said second license granting means grants a license to another client of the same user in possession of said downloading client.

**8.** An information processing apparatus for using content, comprising:

content downloading means for downloading content;
content storing means for storing content;
content moving means for moving the content stored in said content storing means to an external destination or for moving externally acquired content into said content storing means;
license acquiring means for acquiring a license for using content; and
content reproducing means for legitimately using content based on the acquired license.

**9.** An information processing method for using content, comprising the steps of:

downloading content;
storing content;
moving the content stored in said content storing step to an external destination or moving externally acquired content into storage;
acquiring a license for using content; and
legitimately using content based on the acquired license.

**10.** A computer program which is described in a computer-readable format and which allows a computer system to grant a user a license for using content, said user possessing at least two clients which use content legitimately based on acquired licenses, said computer program comprising:

a first step of determining whether or not a client of said user requesting a license is legitimate;
a second step of determining whether or not said user possessing the requesting client is also in possession of another client to which said license has already been granted; and
a third step of granting the same license to said requesting client if the determination in the second step provides an affirmative result.

# F I G. 1

CONTENT PROVIDERS

SERVICE DATABASE C

PROVIDER A    P3

PROVIDER B    P5, P6

SERVICE DATABASE A

SERVICE DATABASE B

P1    P2

P5

CONTENT SERVER A    LICENSE SERVER A    P2    FEE-CHARGING SERVER A

CONTENT SERVER B    LICENSE SERVER B    P5    FEE-CHARGING SERVER B

P1    P2

P5

CUSTOMER

RECORDING MEDIUM
P4

CLIENT A

CLIENT B

EP 1 587 000 A1

# FIG. 2

```
         101              102              103            106
          |                |                |              |      INTERNET
     ┌─────────┐     ┌─────────┐     ┌─────────┐     ┌─────────┐
     │         │     │  MAIN   │     │         │     │ NETWORK │
     │   CPU   │     │ MEMORY  │     │   ROM   │     │INTERFACE│
     └─────────┘     └─────────┘     └─────────┘     └─────────┘
          ⇕                ⇕                ⇕              ⇕
                                    108
  ════════════════════════════════════════════════════════════════
                              BUS
          ⇕                ⇕                ⇕
                  104              105              107
                   |                |                |
     ┌─────────┐     ┌─────────┐     ┌─────────┐
     │ DISPLAY │     │  INPUT  │     │EXTERNAL │
     │CONTROLLER│     │ DEVICE  │     │ DEVICE  │
     │         │     │INTERFACE│     │INTERFACE│
     └─────────┘     └─────────┘     └─────────┘
          |         111      112   113      114          115
     ┌─────────┐     ┌────┐  ┌──────┐  ┌────┐     ┌─────────┐
     │ DISPLAY │     │KBD │  │MOUSE │  │HDD │     │  MEDIA  │
     │ DEVICE  │     └────┘  └──────┘  └────┘     │  DRIVE  │
     └─────────┘                                  └─────────┘

                          100
```

EP 1 587 000 A1

# F I G. 3

F I G. 4

SERVICE DATABASE SERVER

FEE-CHARGING SERVER

DATABASE MANAGEMENT SECTION

ADVANCE REGISTRATION SECTION

LICENSE ISSUANCE SECTION

LICENSE STORAGE SECTION

LICENSE SERVER

ADVANCE REGISTRATION SECTION

LICENSE ACQUISITION AND MANAGEMENT SECTION

CLIENT

# F I G. 5

SERVICE
DATABASE
SERVER

DATABASE
MANAGEMENT
SECTION

CONTENT DATA
RETRIEVAL
SECTION

ENCRYPTION
SECTION

DELIVERY CONTENT
STORAGE SECTION

TRANSMISSION
AND RECEPTION
SECTION

CONTENT SERVER

CONTENT
DOWNLOAD
SECTION

CLIENT

EP 1 587 000 A1

# F I G. 6

```
┌─────────────────────────────┐        ┌──────────────────────┐
│         CLIENT              │        │   LICENSE SERVER     │
│ (ADVANCE REGISTRATION BLOCK)│        └──────────────────────┘
└─────────────────────────────┘
              │                                    │
              ▼          ┌S1                       │
┌──────────────────────────────┐                  │
│ TRANSMIT SERVICE DATA REQUEST │─────────────────▶│
└──────────────────────────────┘                  ▼          ┌S11
              │                     ┌──────────────────────────────┐
              │◀────────────────────│ TRANSMIT USER INFORMATION    │
              │                     │ REQUEST                      │
              ▼          ┌S2        └──────────────────────────────┘
┌──────────────────────────────┐                  │
│   INPUT USER INFORMATION      │                  │
└──────────────────────────────┘                  │
              │          ┌S3                       │
              ▼                                    │
┌──────────────────────────────┐                  │
│ TRANSMIT USER INFORMATION     │─────────────────▶│
└──────────────────────────────┘                  ▼          ┌S12
              │                     ┌──────────────────────────────┐
              │                     │ GENERATE DNK AND SERVICE     │
              │                     │ DATA                         │
              │                     └──────────────────────────────┘
              │                                    │          ┌S13
              │                     ┌──────────────────────────────┐
              │◀────────────────────│   TRANSMIT SERVICE DATA      │
              │                     └──────────────────────────────┘
              ▼          ┌S4                       ▼          ┌S14
┌──────────────────────────────┐   ┌──────────────────────────────┐
│   RECORD SERVICE DATA         │   │ RECORD DETAILS OF REGIS-     │
└──────────────────────────────┘   │ TRATION TO SERVICE DATABASE  │
              │                     └──────────────────────────────┘
              ▼                                    ▼
        ┌──────────┐                        ┌──────────┐
        │   END    │                        │   END    │
        └──────────┘                        └──────────┘
```

# F I G. 7

```
┌─────────────────────────┐
│     CLIENT A STARTS      │
│    DOWNLOAD PROCESS      │
└─────────────────────────┘
             │
             ▼
┌─────────────────────────┐
│  ACCESS CONTENT SERVER A │──── S21
└─────────────────────────┘
             │
             ▼
┌─────────────────────────┐
│ NOTIFY SERVER A OF CONTENT│──── S22
│ DESIGNATION INFORMATION  │
└─────────────────────────┘
             │
             ▼
┌─────────────────────────┐
│ NOTIFY SERVER A OF USER ID│──── S23
└─────────────────────────┘
             │
             ▼
┌─────────────────────────┐
│    RECEIVE CONTENTS      │──── S24
└─────────────────────────┘
             │
             ▼
┌─────────────────────────┐
│    STORE CONTENTS        │──── S25
└─────────────────────────┘
             │
             ▼
        ┌─────────┐
        │   END   │
        └─────────┘
```

# F I G. 8

```
          ┌─────────────────────────┐
          │   CONTENTS SERVER A      │
          │   STARTS PROCESSING      │
          └─────────────────────────┘
                      │
                      ▼
S31 ─┐         ╱─────────────╲         NO
     └────────<  ACCESSED BY  >──────────┐
              ╲  CLIENT A?   ╱           │
               ╲───────────╱            │
                    │                    │
                   YES                   │
                    ▼                    │
   ┌──────────────────────────────┐     │
   │ ACQUIRE CONTENT DESIGNATION   │─S32 │
   │ INFORMATION                   │     │
   └──────────────────────────────┘     │
                    │                    │
                    ▼                    │
   ┌──────────────────────────────┐     │
   │ READ DESIGNATED CONTENTS      │─S33 │
   └──────────────────────────────┘     │
                    │                    │
                    ▼                    │
   ┌──────────────────────────────┐     │
   │ ENCRYPT CONTENTS              │─S34 │
   └──────────────────────────────┘     │
                    │                    │
                    ▼                    │
   ┌──────────────────────────────┐     │
   │ ACQUIRE LICENSE ID CORRE-     │─S35 │
   │ SPONDING TO CONTENT ID FROM   │     │
   │ SERVICE DATABASE A            │     │
   └──────────────────────────────┘     │
                    │                    │
                    ▼                    │
   ┌──────────────────────────────┐     │
   │ ATTACH DECRYPTION KEY AND     │─S36 │
   │ LICENSE ID TO HEADER          │     │
   └──────────────────────────────┘     │
                    │                    │
                    ▼                    │
   ┌──────────────────────────────┐     │
   │ ATTACH HEADER TO ENCRYPTED    │─S37 │
   │ CONTENTS AND OUTPUT BOTH      │     │
   └──────────────────────────────┘     │
                    │                    │
                    ▼                    │
   ┌──────────────────────────────┐     │
   │ RECORD OUTPUT USER ID AND     │─S38 │
   │ CONTENT ID TO SERVICE DATA-   │     │
   │ BASE A                        │     │
   └──────────────────────────────┘     │
                    │                    │
                    ▼                    │
             ┌────────────┐              │
             │    END     │              │
             └────────────┘              │
```

# F I G. 9

HEADER | DATA

CONTENT INFORMATION | LICENSE ID | EKB | $K_{EKB}(K_c)$

CID | CODEC METHOD, ...

ENCRYPTION BLOCK 1 | ENCRYPTION BLOCK 2 | ENCRYPTION BLOCK 3 | ...

IV | Seed | $E_{K'c}(Data)$

CBC MODE

$K'c = Hash(Kc, Seed)$

# F I G . 1 0

```
        ┌─────────────────────────┐
        │   CLIENT A STARTS       │
        │   REPRODUCTION PROCESS  │
        └─────────────────────────┘
                    │
                    ▼
        ┌─────────────────────────┐
  S41   │ READ LICENSE ID OF CONTENTS │
        │ DESIGNATED FOR USE      │
        └─────────────────────────┘
                    │
                    ▼
  S42        ◇ LICENSE                        S43
           ACQUIRED CORESPONDING    NO   ┌──────────────────┐
            TO RETRIEVED LICENSE   ───▶  │ PERFORM LICENSE  │
                  ID?                    │ ACQUITION PROCESS│
                    │                    └──────────────────┘
                   YES                            │
                    ▼◀───────────────────────────┘
  S44                                            S45
           ◇ BEFORE LICENSE          NO   ┌──────────────────┐
             EXPIRATION DATE?       ───▶  │ PERFORM LICENSE  │
                    │                     │ RENEWAL PROCESS  │
                   YES                    └──────────────────┘
                    ▼◀───────────────────────────┘
  S46                                            S47
           ◇ LICENSE  VALID?          NO   ┌──────────────────┐
                    │                ───▶  │ PERFORM ERROR    │
                   YES                     │ HANDLING         │
                    │                      └──────────────────┘
                    │                              │
                    │                              ▼
                    │                         (  END  )
                    ▼
  S48   ┌─────────────────────────┐
        │ READ RECORDED CONTENTS  │
        └─────────────────────────┘
                    │
                    ▼
  S49   ┌─────────────────────────┐
        │ DECRYPT CONTENTS        │
        └─────────────────────────┘
                    │
                    ▼
  S50   ┌─────────────────────────┐
        │ OUTPUT CONTENTS         │
        └─────────────────────────┘
                    │
                    ▼
              (  END  )
```

# F I G. 1 1

```
        ┌─────────────────────────┐
        │  CLIENT A STARTS LICENSE │
        │   AQUISITION PROCESS     │
        └─────────────────────────┘
                    │
                    ▼
        ┌─────────────────────────┐
S61 ──  │  ACQUIRE DESIGNATION OF  │
        │  LICENSE TO BE PURCHASED │
        └─────────────────────────┘
                    │
                    ▼
        ┌─────────────────────────┐
S62 ──  │ ACQUIRE USER ID AND PASSWORD │
        └─────────────────────────┘
                    │
                    ▼
        ┌─────────────────────────┐
S63 ──  │ TRANSMIT LICENSE REQUEST │
        └─────────────────────────┘
                    │
                    ▼
    S64                                              S66
        ◇─────────────────◇      NO    ┌─────────────────────┐
        │ LICENSE GRANTED? │ ────────▶ │ PERFORM ERROR       │
        ◇─────────────────◇           │ HANDLING            │
                    │                  └─────────────────────┘
                  YES                            │
                    ▼                            ▼
        ┌─────────────────────────┐        ┌─────────┐
S65 ──  │ STORE LICENSE, CERTIFICATE │      │   END   │
        │ AND SECRET KEY            │       └─────────┘
        └─────────────────────────┘
                    │
                    ▼
              ┌───────────┐
              │  RETURN   │
              └───────────┘
```

28

# F I G. 1 2

| |
|---|
| LICENSE ID |
| DATE AND TIME OF CREATION |
| EXPIRATION DATE |
| USE CONDITION |
| LEAF ID |
| ELECTRONIC SIGNATURE |

LICENSE

```
        ┌─────────────────────────┐
        │  LICENSE SERVER A STARTS │
        │  LICENSE GRANTING PROCESS│
        └─────────────────────────┘
                    │
                    ▼
         ◇─────────────────────◇   S71
    NO  ◇  ACCESSED BY CLIENT A? ◇
   ┌────◇─────────────────────◇
   │            │ YES
   │            ▼
   │  ┌──────────────────────────────┐
   │  │ REQUEST TRANSMISSION OF USER ID,│
S72│  │ PASSWORD AND LICENSE ID AND     │
   │  │ ACQUIRE WHAT IS TRANSMITTED     │
   │  └──────────────────────────────┘
   │            │
   │            ▼
   │  ┌──────────────────────────────┐
S73│  │ REQUEST SERVICE DATABASE A TO  │
   │  │ CHECK USER ID AND PASSWORD     │
   │  └──────────────────────────────┘
```

ATTACH LEAF ID — S80

SELECT USE CONDITION — S81

ATTACH ELECTRONIC SIGNATURE
(USING SECRET KEY OF LICENSE — S82
SERVER A)

TRANSMIT LICENSE — S83

RECORD OUTPUT LICENSE ID AND
USER ID TO SERVICE DATABASE A — S84

PERFORM FEE-CHARGING PROCESS — S85

S75
HANDLE ERROR ◄── NO ── COLLATION OK? S74
END

YES
REQUEST FEE-CHARGING SERVER
S76 TO PROCESS CREDIT

S78
HANDLE ERROR ◄── NO ── CREDITWORTHY? S77
END

YES
SELECT LICENSE BASED ON
S79 TRANSMITTED LICENSE ID

END

EP 1 587 000 A1

# FIG. 14

```
    ┌──────────────────────────┐
    │  CLIENT A STARTS LICENSE │
    │  RENEWAL PROCEESS        │
    └──────────────────────────┘
                │
                ▼
    ┌──────────────────────────┐
    │  ACQUIRE DESIGNATION OF   │─── S91
    │  LICENSE TO BE RENEWED    │
    └──────────────────────────┘
                │
                ▼
    ┌──────────────────────────┐
    │ ACQUIRE USER ID AND PASSWORD │─── S92
    └──────────────────────────┘
                │
                ▼
    ┌──────────────────────────────┐
    │ TRANSMIT USER ID AND PASSWORD │
    │ TOGETHER WITH LICENSE DESIG-  │─── S93
    │ NATION INFORMATION            │
    └──────────────────────────────┘
                │
                ▼
    ┌──────────────────────────┐
    │  RECEIVE USE CONDITION    │─── S94
    └──────────────────────────┘
                │
                ▼
    ┌──────────────────────────┐
    │  REQUEST PURCHASE OF USE  │─── S94
    │  CONDITION                │
    └──────────────────────────┘
                │
                ▼
    ┌──────────────────────────┐
    │  ACQUIRE USE CONDITION    │─── S95
    └──────────────────────────┘
                │
                ▼
    ┌──────────────────────────────┐
    │ UPDATE LICENSE USE CONDITION  │─── S96
    └──────────────────────────────┘
                │
                ▼
         ┌──────────┐
         │  RETURN  │
         └──────────┘
```

# F I G. 1 5

```
┌─────────────────────────────┐
│   LICENSE SERVER A STARTS    │
│   LICENSE RENEWAL PROCESS    │
└─────────────────────────────┘
              │
              ▼
┌─────────────────────────────┐
│   GRANT ACCESS TO CLIENT     │──── S101
└─────────────────────────────┘
              │
              ▼
┌─────────────────────────────┐
│ RECEIVE LICENSE RENEWAL REQUEST │──── S102
│ INFORMATION                  │
└─────────────────────────────┘
              │
              ▼
┌─────────────────────────────┐
│   PRESENT USE CONDITION      │──── S103
└─────────────────────────────┘
              │
              ▼
┌─────────────────────────────┐
│   TRANSMIT USE CONDITION     │──── S104
└─────────────────────────────┘
              │
              ▼
        ┌──────────┐
        │   END    │
        └──────────┘
```

EP 1 587 000 A1

( LICENSE SERVER B STARTS LICENSE GRANTING PROCESS )

S111 — ACCESSED BY CLIENT B? — NO / YES

S112 — REQUEST TRANSMISSION OF USER ID, PASSWORD AND LICENSE ID AND ACQUIRE WHAT IS TRANSMITTED

S113 — REQUEST SERVICE DATABASE B TO CHECK USER ID AND PASSWORD

S114 — CHECK OK? — NO → S115 HANDLE ERROR → END / YES

S116 — TRANSMIT USER ID TO SERVICE DATABASE B TO REQUEST CHECK ON WHETHER THIS USER HAS CLIENT OF PROVIDER A

S117 — CHECK OK? — NO → GO TO NORMAL CHARGING PROCESS (S121) / YES

S118 — FROM SERVICE DATABASE C, ACQUIRE CLIENT ID OF CLIENT A HAVING THE SAME USER ID

S119 — TRANSMIT LICENSE ID AND CLIENT ID OF CLIENT A TO SERVICE DATABASE C TO REQUEST CHECK ON WHETHER CLIENT A HAS ALREADY PURCHASED THE SAME LICENSE

S120 — CHECK OK? — NO / YES

GRANTED FREE OF CHARGE BECAUSE LICENSE HAS ALREADY BEEN PURCHASED

GO TO NORMAL FEE-CHARGING PROCESS (S121)

S121 — REQUEST FEE-CHARGING SERVER TO PROCESS CREDIT

S122 — CREDITWORTHY? — NO → S123 HANDLE ERROR → END / YES

S124 — SELECT LICENSE BASED ON TRANSMITTED LICENSE ID

S125 — ATTACH LEAF ID

S126 — SELECT USE CONDITION

S127 — ATTACH ELECTRONIC SIGNATURE USING SECRET KEY OF LICENSE SERVER B

S128 — TRANSMIT LICENSE

S129 — RECORD OUTPUT LICENSE ID AND USER ID TO SERVICE DATABASE B

S130 — PERFORM FEE-CHARGING PROCESS

( END )

# F I G. 1 7

LICENCE SERVER

CONTENT SERVER

| EKB | Enc (KR, Kc) | Enc (Kc, Content) |

DNK ⟶

KR ⟶

CLIANT

Kc ⟶

CONTENT

# F I G. 1 8

| Enc (DNK, KR) |

## INTERNATIONAL SEARCH REPORT

| | International application No. |
|---|---|
| | PCT/JP03/16624 |

A. CLASSIFICATION OF SUBJECT MATTER
   Int.Cl$^7$  G06F12/14, G06F15/00, G06F17/60

According to International Patent Classification (IPC) or to both national classification and IPC

B. FIELDS SEARCHED

Minimum documentation searched (classification system followed by classification symbols)
   Int.Cl$^7$  G06F12/14, G06F15/00, G06F17/60

Documentation searched other than minimum documentation to the extent that such documents are included in the fields searched
   Jitsuyo Shinan Koho          1922–1996   Jitsuyo Shinan Toroku Koho   1996–2004
   Kokai Jitsuyo Shinan Koho    1971–2004   Toroku Jitsuyo Shinan Koho   1994–2004

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2001-78266 A  (Sanyo Electric Co., Ltd.),<br>23 March, 2001 (23.03.01),<br>All pages; all drawings<br>(Family: none) | 1,3-10<br>2 |
| Y | JP 2002-164885 A  (Sanyo Electric Co., Ltd.),<br>07 June, 2002 (07.06.02),<br>All pages; all drawings<br>(Family: none) | 1-10 |
| Y | JP 2002-372976 A  (Sony Corp.),<br>26 December, 2002 (26.12.02),<br>All pages; all drawings<br>(Family: none) | 2 |

☐ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 April, 2004 (06.04.04) | 20 April, 2004 (20.04.04) |

| Name and mailing address of the ISA/ | Authorized officer |
|---|---|
| Japanese Patent Office | |
| Facsimile No. | Telephone No. |

Form PCT/ISA/210 (second sheet) (July 1998)